Europäisches Patentamt

European Patent Office

Office européen des brevets

(11) Veröffentlichungsnummer: **0 413 327 A2**

## EUROPÄISCHE PATENTANMELDUNG

(21) Anmeldenummer: 90115673.7

(51) Int. Cl.5: **D01F 6/62**

(22) Anmeldetag: **16.08.90**

(30) Priorität: **18.08.89 DE 3927331**

(43) Veröffentlichungstag der Anmeldung:
**20.02.91 Patentblatt 91/08**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Johne, Rudolf**
**Edelweissring 40**
**D-8901 Königsbrunn(DE)**
Erfinder: **Rötgers, André**
**Schlesierstrasse 44**
**D-8903 Bobingen(DE)**
Erfinder: **Greiser, Wolfgang**
**Am Meiers Kreuz 6**
**D-8901 Neusäss(DE)**

(54) Polyester-Monofil für die Karkasse von Gürtelreifen.

(57) Beschrieben wird ein Monofil für die Karkasse von Gürtelreifen. Das Monofil besteht aus einem Polyester, der zu mehr als 90% aus Polyethylenterephthalat aufgebaut ist, ein hohes Molekulargewicht entsprechend einer Intrinsic-Viskosität von mindestens 0,64 und einen Gehalt an Carboxylgruppen von höchstens 15 mval/kg besitzt. Das Monofil hat einen Durchmesser von 0,4 bis 0,9mm, eine feinheitsbezogene Höchstzugkraft von mindestens 40 cN/tex, eine Höchstzugkraftdehnung von 12 bis 30%, eine Bezugsdehnung bei einer Belastung vcn 45N von etwa 1%, einen Thermoschrumpf von 0,5 bis 5% bei 160°C Heißluft und eine Gummihaftung von mindestens 30 cN/tex/cm.

EP 0 413 327 A2

## POLYESTER-MONOFIL FÜR DIE KARKASSE VON GÜRTELREIFEN

Die Erfindung betrifft ein Monofil für die Karkasse von Gürtelreifen.

Aus der EP-OS 312 038 ist es bekannt, Monofile für die Reifenkarkasse aus Polyamid herzustellen. Polyester wurde als Karkassenmaterial bisher nur in Form von multifilem Reifencord eingesetzt; die Herstellung von multifilem Reifencord ist jedoch wegen des mehrfachen Hochdrehens, Fachens und Zwirnens relativ aufwendig.

Monofile aus Polyester für Gürtelreifen sind zwar aus der DE-PS 21 61 967 bekannt; sie werden jedoch nur für den Gürtel des Gürtelreifens eingesetzt und sind wegen der besonderen Anforderungen an das Karkassenmaterial für die Karkasse nicht geeignet.

Die Anforderungen an das Karkassenmaterial lassen sich unter der Forderung HMLS (High Modulus-Low Shrinkage) schlagwortartig zusammenfassen: Die an sich widersprüchlichen Forderungen nach einem hohen Anfangsmodul, d.h. einer steilen Kraft-Dehnungs-Kurve, und nach einer geringen Thermoschrumpfneigung müssen gleichzeitig erfüllt sein. Dies setzt neben einem speziellen Herstellungsverfahren auch hohe Molekulargewichte des Polyesters voraus.

Weiterhin müssen Polyester-Monofile für die Reifenkarkasse gegen hydrolytischen und aminolytischen Abbau resistent sein; d.h. ihr Gehalt an Carboxylgruppen soll möglichst gering sein.

Ein hohes Molekulargewicht und ein geringer Gehalt an Carboxylgruppen bedeuten aber auch eine Verringerung des Gehalts an reaktiven Gruppen, die die Haftung des Monofils am Kautschuk des Reifens bestimmen. Die bei Polyester ohnehin problematische Gummihaftung ist bei Monofilen auf Grund ihrer geringen spezifischen Oberfläche gegenüber einem multifilen Garn des gleichen Titers nochmals verringert.

Der Erfindung liegt die Aufgabe zugrunde, ein Monofil für die Karkasse von Gürtelreifen zur Verfügung zu stellen, das bei einfacher Herstellbarkeit einen hohen Anfangsmodul und eine geringe Thermoschrumpfneigung besitzt und dennoch eine gute Haftung am Kautschuk des Reifens aufweist.

Diese Aufgabe wird erfindungsgemäß dadurch gelöst, daß das Monofil aus einem Polyester besteht, der zu mehr als 90% aus Polyethylenterephthalat aufgebaut ist, ein Molekulargewicht entsprechend einer Intrinsic-Viskosität von mindestens 0,64 und einen Gehalt an Carboxylgruppen von höchstens 15 mval/kg besitzt, und daß das Monofil einen Duchmesser von 0,4 bis 0,9 mm, eine feinheitsbezogene Höchstzugkraft von mindestens 40 cN/tex, eine Höchstzugkraftdehnung von 12 bis 30%, eine Bezugsdehnung von etwa 1% bei einer Belastung von 45N, einen Thermoschrumpf von 0,5 bis 5% bei 160°C Heißluft sowie eine Gummihaftung von mindestens 30 cN/tex/cm besitzt.

Die bereits oben erwähnte DE-PS 21 61 967 beschreibt ein ähnliches Polyester-Monofil für den Gürtel von Gürtelreifen. Durch die vorliegende Erfindung ist es nun überraschenderweise gelungen, dieses Polyester-Monofil so zu modifizieren, daß es als Karkassenmaterial eingesetzt werden kann. Insbesondere zeichnet es sich gegenüber dem vorbekannten Polyester-Monofil durch eine höhere Elastizität, einen größeren Durchmesser und eine ausgezeichnete Gummihaftung aus, die vorzugsweise sogar höher liegt als die Höchstzugkraft.

Der geringe Gehalt an Carboxylgruppen wird dabei vorzugsweise durch eine Feststoffkondensation, d.h. ohne weitere chemische Modifikation des Polyesters erreicht. Stattdessen kann der Gehalt an Carboxylgruppen aber auch durch den Zusatz von Verschlußmitteln, wie etwa Carbodiimiden, abgesenkt werden, wie es z.B. in der DR-OS 17 30 495 beschrieben ist.

Die Gummihaftung wird vorzugsweise durch eine Voraktivierung des Polyester-Monofils mit Isocyanaten erreicht, die als organische Lösung, z.B. in Toluol, aufgebracht werden.

Obwohl diese Techniken für multifile Reifencorde aus Polyester bekannt sind, ist es überraschend, daß sie auch bei Polyester-Monofilen mit einem extrem geringen Gehalt an Carboxylgruppen zu den hohen Werten der Gummihaftung führen.

Die Messung von Festigkeit und Thermoschrumpf erfolgt nach den DIN-Vorschriften; die Gummihaftung wird zweckmäßigerweise nach dem in der Gummiindustrie weit verbreiteten H-Test gemessen. Hierzu wird das zu untersuchende Monofil mit einem Ende in einem Gummiklötzchen von etwa 10 mm Kantenlänge einvulkanisiert. Das Monofil wird an der Reißmaschine an seinem freien Ende mittels Klemmbacken eingespannt; am anderen Ende wird das Gummiklötzchen mittels einer gabelförmigen Vorrichtung gehalten. Die freie Monofillänge zwischen den beiden Fixpunkten beträgt 100 mm, die Reißgeschwindigkeit liegt bei 500 mm/min. Die Gummihaftung errechnet sich aus der zum Herausziehen des eingebetteten Monofils erforderlichen Kraft, dividiert durch den Ausgangstiter und die Länge des einvulkanisierten Monofilendes.

Je nach Reifenkonstruktion können Monofile mit rundem Querschnitt oder auch mit profiliertem Querschnitt verwendet werden, um sie noch biegesteifer zu gestalten. Bewährt haben sich besonders ovale Querschnitte.

Beispiel 1

Polyester-Chips mit einer bei 25° C in Dichloressigsäure gemessenen Intrinsic-Viskosität von 0,56 und einem Gehalt an COOH von 6 bis 8 mval/kg werden im Vakuum-Taumeltrockner 18 Stunden lang bei einer Temperatur von 245 bis 250° C und einem Druck von 0,3 Torr feststoffkondensiert. Hierbei steigt die Intrinsic-Viskosität auf 0,76, während der Gehalt an COOH auf ca. 4 mval/kg sinkt. Nach Abkühlung im Vakuum werden die Chips unter trockener Atmosphäre auf einer Schmelzspinnanlage zu Monofilen versponnen. Hierbei beträgt die Temperatur der Polyesterschmelze am Extruderausgang 280° C. Das Spinnwerkzeug besitzt 7 Spinndüsenlöcher mit einem Lochdurchmesser von 2,0 mm. Die Förderung beträgt 373 g/min.

Die Monofile werden in 70° C heißes Wasser gesponnen, danach von einem ersten Streckwerk mit 18,6 m/min abgezogen, in einer Wasserwanne bei 80° C durch einen Ziehstein von 1,5mm Durchmesser auf das 5,1-fache verstreckt und in einem infrarotgeheizten Heißluftkanal bei einer Heizstrahlertemperatur von 300° C nochmals um das 1,2-fache verstreckt. Zwischen dem ersten und dritten Streckwerk erfolgt somit eine Gesamtverstreckung um das 6,5-fache. Die Monofile werden dann im Heißluftofen bei einer Heizstrahlertemperatur von 260° C um den Faktor 0,877 geschrumpft und auf Scheibenspulen gespult.

Die auf diese Weise hergestellten Monofile haben einen Durchmesser von 0,70 mm, eine feinheitsbezogene Höchstzugkraft von 50,0 N/tex, eine Bruchdehnung von 23%, eine Bezugsdehnung von 12,2% (bei 27 cN/tex), einen Thermoschrumpf von 2,5% gemessen bei 180° C, eine Intrinsic-Viskosität von 0,74 und einen Gehalt an Carboxylgruppen von 6 mval/kg.

Eine Ausrüstung für gute Gummihaftung wird in einem getrennten Arbeitsgang aufgebracht. Hierzu werden die Monofile mit einer Geschwindigkeit von 6 m/min durch ein Bad gezogen, das aus Polymethylen-Polyphenyl-Isocyanat (®Voranate M 580 von The Dow Chemical Company) 15%ig in Polyol besteht. Die Monofile werden anschließend 90 Sekunden lang ohne Verstreckung in einem Ofen bei einer Temperatur von 220 ° C getrocknet, dann in Resorzin-Formaldehyd-Latex (RFL) getaucht, 90 Sekunden lang unter einer Zugkraft von 24N im Ofen bei einer Temperatur von 220° C ausgehärtet und wieder aufgespult.

Die auf diese Weise ausgerüsteten Monofile besitzen eine Höchstzugkraft von 266 N, eine Reißdehnung von 14%, eine Bezugsdehnung von 1% bei 45N, einen Heißluftschrumpf von 4,8 % bei 160° C und eine Schrumpfkraft von 1100 cN bei 160° C. Die Gummihaftung der Monofile ist größer als 266 Ncm, also größer als die Höchstzugkraft.

Beispiel 2

Aus dem gleichen Polyesterrohstoff wie in Beispiel 1 werden Monofile des Durchmessers 0,80 mm hergestellt, und zwar auf einer Monofilanlage mit folgenden Parametern: Förderung 418 g/min, 6 Spinndüsen mit einem Lochdurchmesser von 2,6mm, Geschwindigkeit des ersten Streckwerkes 22,8m/min, Verstreckverhältnis, Temperaturen und Streckgeschwindigkeiten wie in Beispiel 1, Temperatur in der ersten Streckzone 72° C, Ziehstein 1,5mm Durchmesser, Temperatur in der zweiten und dritten Streckzone 320° C.

Die sich hierbei ergebenden Monofile haben eine Feinheitsfestigkeit von 50 cN/tex, eine Höchstzugkraftdehnung von 21%, eine Bezugsdehnung von 13,5% bei 27 cN/tex, einen Thermoschrumpf von 2,6% bei einer Temperatur von 180° C, eine Intrinsic-Viskosität von 0,74 und einen Gehalt an Carboxylgruppen von 5 mval/kg.

Beispiel 3

Auf ähnliche Weise wird ein Monofil mit ovalem Querschnitt hergestellt, dessen große Achse 1,0mm und die kleine Achse 0,35mm beträgt.

Vor Aufbringung der Ausrüstung besitzen die Monofile eine Höchstzugkraft von 285,7 N bei einer Höchstzugkraftdehnung von 28%, eine Dehnung von 1,4% bei einer Belastung von 45 N und einen Thermoschrumpf von 0,59% bei 160° C.

Durch eine unterschiedliche Spannung bei der Ausrüstung mit ®Voranate M 580 ergeben sich ausgerüstete Monofile folgender Eigenschaften:

| Höchstzugkraft [N] | Höchstzugkraftdehnung [%] | Bezugsdehnung bei 45 N [%] | Schrumpf bei 160 $^\circ$ C [%] |
|---|---|---|---|
| 286 | 23,3 | 1,2 | 0,77 |
| 287 | 21,0 | 1,2 | 1,15 |
| 294 | 18,8 | 1,1 | 1,76 |
| 299 | 15,1 | 1,0 | 3,26 |
| 300 | 14,4 | 1,0 | 3,53 |
| 303 | 13,2 | 1,0 | 4,02 |
| 305 | 12,5 | 0,9 | 4,09 |

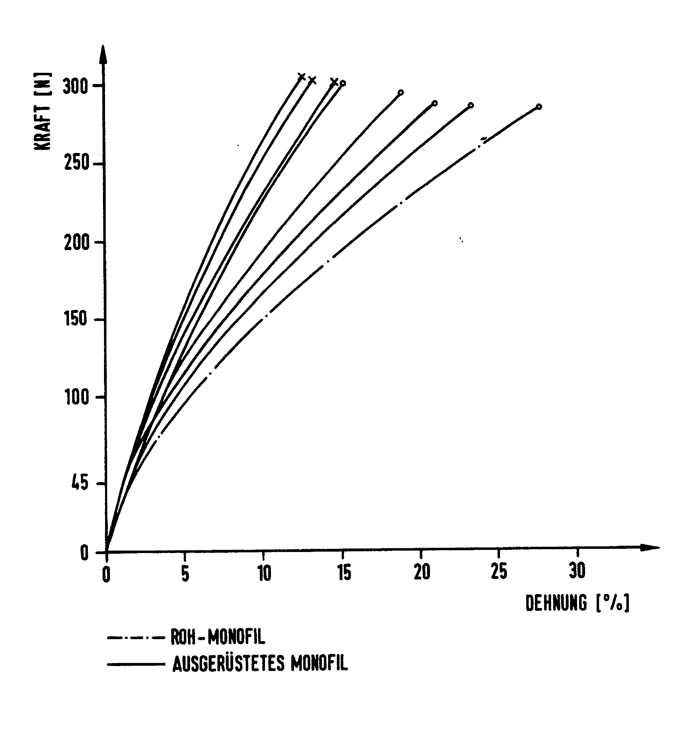

Den Zusammenhang zwischen Zugkraft und Dehnung dieser ausgerüsteten Monofile zeigt das Diagramm der einzigen Figur, in dem sich die strichpunktierte Kurve auf das Monofil vor Aufbringen der Ausrüstung und die voll ausgezogenen Kurven auf die ausgerüsteten Monofile beziehen.

### Ansprüche

1. Monofil für die Karkasse von Gürtelreifen, dadurch *gekennzeichnet*, daß das Monofil aus einem Polyester besteht, der zu mehr als 90 % aus Polyethylenterephthalat aufgebaut ist und der ein Molekulargewicht entsprechend einer Intrinsic-Viskosität von mindestens 0,64 und einen Gehalt an Carboxylgruppen von höchstens 15 mval/kg besitzt, und daß das Monofil einen Durchmesser von 0,4 bis 0,9 mm, eine feinheitsbezogene Höchstzugkraft von mindestens 40 cN/tex, eine Höchstzugkraftdehnung von 12 bis 30%, eine Bezugsdehnung von etwa 1 % bei einer Belastung von 45N, einen Thermoschrumpf von 0,5 bis 5% bei 160 $^\circ$ C Heißluft sowie eine Gummihaftung von mindestens 30 cN/tex/cm besitzt.

2. Monofil nach Anspruch 1, dadurch *gekennzeichnet*, daß der Gehalt an Carboxylgruppen höchstens 10 mval/kg beträgt.

3. Monofil nach Anspruch 1 oder 2, dadurch *gekennzeichnet*, daß der Gehalt an Carboxylgruppen höchstens 7 mval/kg beträgt.

4. Monofil nach mindestens einem der vorhergehenden Ansprüche, dadurch *gekennzeichnet*, daß die feinheitsbezogene Höchstzugkraft mindestens 45 cN/tex beträgt.

5. Monofil nach mindestens einem der vorhergehenden Ansprüche, dadurch *gekennzeichnet*, daß die feinheitsbezogene Höchstzugkraft mindestens 50 cN/tex beträgt.

6. Monofil nach einem der vorhergehenden Ansprüche, dadurch *gekennzeichnet*, daß der Polyester zur Erzielung des geringen Gehaltes an Carboxylgruppen feststoffkondensierter Polyester ist.

7. Monofil nach mindestens einem der vorhergehenden Ansprüche, *gekennzeichnet*, durch einen Zusatz von Verschlußmitteln zur Absenkung des Gehaltes an Carboxylgruppen.

8. Monofil nach Anspruch 7, dadurch gekennzeichnet, daß die Verschlußmittel aus Carbodiimiden bestehen.

9. Monofil nach mindestens einem der vorhergehenden Ansprüche, dadurch *gekennzeichnet*, daß die Gummihaftung größer als die Höchstzugkraft ist.

10. Monofil nach mindestens einem der vorhergehenden Ansprüche, dadurch *gekennzeichnet*, daß das Monofil zur Erzielung der Gummihaftung mit Isocyanaten voraktiviert ist, die als organische Lösung aufgebracht sind.

11. Monofil nach mindestens einem der vorhergehenden Ansprüche, dadurch *gekennzeichnet*, daß das Monofil einen runden Querschnitt hat.

12. Monofil nach mindestens einem der Ansprüche 1 bis 10, dadurch *gekennzeichnet*, daß das Monofil einen ovalen Querschnitt hat.